# EUROPEAN PATENT APPLICATION

(11) **EP 1 050 362 A1**
(43) Date of publication of application: **08.11.2000**
(21) Application number: 00109258.4
(22) Date of filing: 28.04.2000
(51) Int. Cl.: B23K 37/02

(54) **Slave arm of a complete welding unit**

(30) Priority: 04.05.1999 IT TO990074 U
(71) Applicant: ASPIRMIG S.r.l., 10060 Virle Piemonte (TO) (IT)
(72) Inventor: Bravaccini, Albano, 10070 Borgaro (TO) (IT)
(74) Representative: Di Francesco, Gianni

(57) **Abstract**

Description of a mobile slave arm of a complete welding unit to be used in large workshops or shipyards, including a supporting column consisting of at least two hollow metal cylinders (3, 8) inserted the one into the other, the internal one being rotatable, and the external one (3) being fixed to a base metal plate (5); an extensible arm (16), consisting of two pieces the one being able to come off the other by means of a hydraulic piston; a tool-holding plate (21) connected to the end of the arm, and an hydraulic piston (40) placed between the column and the arm.

## Description

The present invention relates to a slave arm of a complete welding unit to be used especially in shipyards and large workshops.

It is well known that shipyards and large workshops need welding equipment, as well as all their supporting devices, to be located in places the access to which is not easy and/or are at considerable height so that laying and transporting the equipment still represents a major problem.

It is an object of the present invention to provide a device that allows to position the equipment needed for the welding and for all complementary operations, next to the operative place without any problems of moving and lifting each one of the devices, so that the ergonomics at the working place reaches a maximum according to the present legislation.

Said object is achieved according to the present invention by a mobile slave arm of a complete welding unit presenting the characteristics disclosed in claim 1.

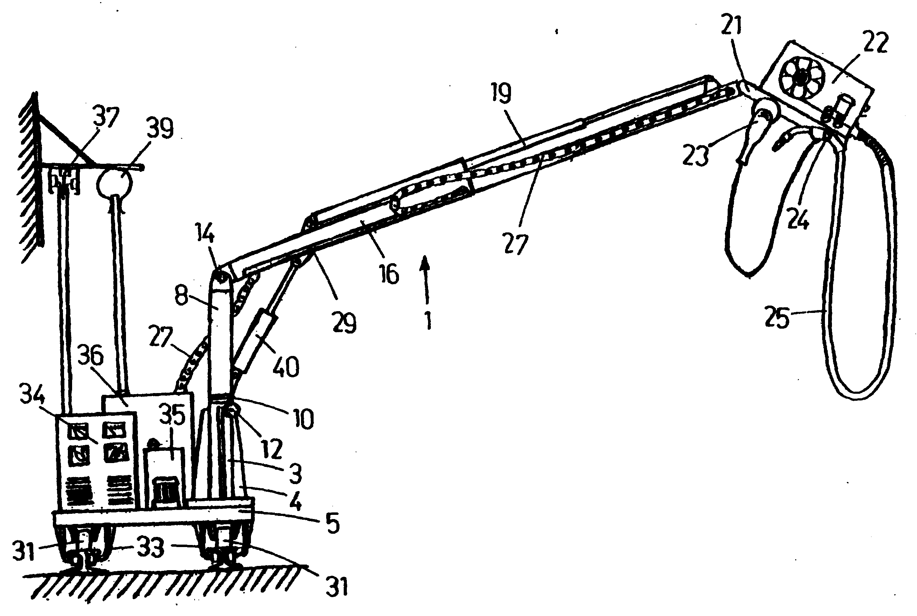

Further characteristics and advantages will become clear by the following description which refers to the accompanying drawing, provided as non-restrictive example and showing a mobile slave arm according to the invention.

With reference to the figure, reference number 1 indicates an overall mobile slave arm, of large size, adapted to be used in shipyards or large workshops.

The arm consists of a supporting column or pedestal, made of two hollow metal cylinders 3 and 8, the one 3 fixed by means of welding and with the respective reinforcement tabs 4, to a supporting base (5) consisting of a plate of proper size, and the other 8 inserted into the first one and rotating coaxial to it by known means, for instance roller bearings 10. The movement of the internal cylinder can be obtained also by means of a motor, the pinion of which is engaged on a toothed crown integral to said cylinder (not shown). The rotation of the cylinder 8 can be stopped by means of a manual clutch 12 (in the case shown) or by remote control.

At the upper end of the cylinder 8 there is connected, by means of a hinge 14 the end of an extensible arm 16, consisting of two parts, the section of which being preferably rectangular, inserted the one into the other in a way that allows them to come off. The length of the arm 16 can be adjusted by adjusting the portion of the second part which comes off from the first part, with the help of a double-sliding hydraulic cylinder 19, located on the back of the arm itself. The end of the arm 16 which is not connected to the cylinder 8, carries a tool-holder plate 21, on which there are also mounted the device to draft the wire 22 of the welding unit, the supports to hook the different tools such as the abrasive disk 23, the pneumatic chisels, the drill, etc. Besides, it is also possible to mount on it several outlets and pneumatic drives and, of course, the welding torch with its connecting pipe 25.

The arm 16 is provided with a pipe-holder chain 27, on which there are all the service feeders for the different tools mounted on the plate 21. After an interruption at the end of a conduit 29 connected to the external part of the arm 16, it continues at the other end of the conduit 29 in order to get connected to the base of the support 3.

Said base can be made mobile by providing it with wheels 31, and positioned on a translation way which is longitudinal to the workshop or the shipyard and consists of two rails. It is obvious that at least one of the wheels can be motorised and all of them can be coupled to counter-brackets of the roll type adapted to avoid overturning 33. The base 5 serves as support for different kind of equipment such as: the welding generator 34, the hydraulic gearcase 35 for the hydraulic control of the whole equipment, and the fumes aspirator 36. An electrical feeding line 36 in reinforced-trolley and an exhaust conduit 39 to discharge the fumes outside, with the reinforced-tube system (in case the work is done in a workshop with closed doors), can be made parallel to the longitudinal translation way, in order to grant the effective operation of the whole plant. The arm 5 will be provided with a hydraulic control cylinder 40, responding to the commands of the cylinder 19, and adapted to vary the inclination of said arm 16 in relationship to the support column.

Cylinders 19 and 40 of the arm 16 and of the motorised base 5, can be operated, for example, by means of a push-button panel applied to a cable winder (not shown), mounted on the plate 21 at the end of the arm. Alternatively the control of the movements can be obtained by means of infrared remote control coupled to a receiver located on the base 5.

## Claims

1. Mobile slave arm of a complete welding unit to be used in large workshops or shipyards, characterised in that it consists of
- a supporting column consisting of at least two hollow metal cylinders (3, 8) inserted the one into the other, the internal one being coaxially rotatable, and the external one (3) being fixed by one of its ends to a base metal plate (5) serving as base to said supporting column;
- an extensible arm (16) engaged to said supporting column, consisting of two parts the one being able to come off the other by means of an hydraulic piston;
- a tool-holding plate (21) connected to the end of the arm which is not engaged to the supporting column, and
- an hydraulic piston (40) placed between the supporting column and said extensible arm adapted to adjust the relative position.

2. Mobile arm as claimed in claim 1 characterised in that the tool-holder plate (21) is provided with supports to hook the different tools and the welding torch (24) with its connecting pipe (25) and the device to drag the wire (22).

3. Mobile arm as claimed in claim 1 characterised in that the tool-holder plate (21) is provided with a push-button panel to control the movements of the mobile arm.

4. Mobile arm as claimed in claim 1 characterised in that the base plate (5) is provided with wheels (31) to be displaced on rails and with counter-brackets of the roll type adapted to prevent overturning (33).

5. Mobile arm as claimed in claim 1 characterised in that the dimension of the base plate is such that it can house and support at the same time a welding generator (34), a hydraulic gearcase (35), an aspirator (36) for the welding fumes as well as everything that is necessary.

6. Mobile arm as claimed in claim 1 characterised in that at least one of the wheels mounted on the base plate (5) is controlled by a motor.

7. Mobile arm as claimed in claim 1 characterised in that the relative rotation between the two cylinders of the supporting column is controlled by an electric motor.

8. Mobile arm as claimed in claim 1 characterised in that the extensible arm is controlled by a double-sliding hydraulic cylinder (19).
